# EUROPEAN PATENT SPECIFICATION

(11) **EP 3 778 472 B1**
(45) Date of publication and mention of the grant of the patent: **25.03.2026**
(21) Application number: 20190160.0
(22) Date of filing: 07.08.2020
(51) Int. Cl.: C01B 3/26

(54) **PRODUCTION SYSTEM FOR GENERATING HYDROGEN GAS AND CARBON PRODUCTS**
PRODUKTIONSSYSTEM ZUR ERZEUGUNG VON WASSERSTOFFGAS UND KOHLENSTOFFPRODUKTEN
SYSTÈME DE PRODUCTION POUR GÉNÉRER DU GAZ HYDROGÈNE ET DES PRODUITS CARBONÉS

(30) Priority: 14.08.2019 US 201916540947
(43) Date of publication of application: 17.02.2021
(73) Proprietor: GE Vernova Technology GmbH, 5400 Baden (CH)
(72) Inventor: HART, Richard Louis, Niskayuna, NY 12309 (US); SMITH, David J., Niskayuna, NY 12309 (US); WOODRUFF, David W., Niskayuna, NY 12309 (US); DOHERTY, Mark Daniel, Niskayuna, NY 12309 (US)
(74) Representative: Novagraaf Group

(56) References cited:
- US-A- 5 899 175
- US-A1- 2009 060 805
- US-A1- 2018 065 850
- YANG LI ET AL: "Deep regeneration of activated carbon catalyst and autothermal analysis for chemical looping methane thermo-catalytic decomposition process", INTERNATIONAL JOURNAL OF HYDROGEN ENERGY, ELSEVIER SCIENCE PUBLISHERS B.V., BARKING, GB, vol. 43, no. 37, 23 August 2018 (2018-08-23), pages 17633 - 17642, XP085457286, ISSN: 0360-3199, DOI: 10.1016/J.IJHYDENE.2018.07.202

## Description

### FIELD

The subject matter described herein relates to generating hydrogen gas and carbon products through chemical reaction, and specifically through hydrocarbon pyrolysis.

### BACKGROUND

Electrical power can be produced via the combustion of hydrocarbons, such as oil and natural gas (including methane). Combustion of hydrocarbons typically generates carbon dioxide and other greenhouse gases that may be harmful to the environment. There are challenges involved with capturing and sequestering the carbon dioxide that is produced to reduce the environmental impact. Hydrogen gas can be utilized as a fuel source for powering vehicles, generating electrical power via fuel cells, engines, power plants, or the like, and powering various other loads in a "hydrogen economy." One method for generating hydrogen gas is through hydrocarbon pyrolysis. Pyrolysis utilizes heat to break the carbon-hydrogen bonds in methane and/or other hydrocarbons to produce hydrogen gas and a solid carbon material, without producing carbon dioxide. Therefore, a significant benefit of producing hydrogen gas via hydrocarbon pyrolysis for generating electrical power, relative to conventional hydrocarbon combustion, is reduced emissions of carbon dioxide and other greenhouse gases.

One consideration with implementing hydrocarbon pyrolysis for power generation is that the hydrogen gas that is produced via pyrolysis has a lower energy content than the hydrocarbons that are reacted to produce the hydrogen. Another factor with implementing hydrocarbon pyrolysis is that the reaction is endothermic and thus requires heat to break apart the carbon-hydrogen bonds of the hydrocarbon and to prevent the reverse reaction from occurring. The treatment or disposal of the solid carbon byproduct of the reaction may represent a challenge. The carbon is typically amorphous with varying molecular and higher order structures, has relatively low value, and has limited usefulness. One conventional use for the carbon byproduct is for making soot that can be used to fill rubber in tires.

US 2018/065850 A1 discloses an apparatus for catalytic methane decomposition comprising a plurality of reactors. One embodiment, which has the features of the preamble of independent claim 1, includes three rectors arranged in series. Each reactor comprises an inlet for iron oxide containing catalyst and an inlet for methane. In use, the catalyst is transferred between the adjacent reactors. Each subsequent reactor in the series is operated at a higher pressure than the preceding reactor, allowing the catalyst to travel to reactors of higher pressure to facilitate production of a higher purity graphitic carbon. The series reactors each have the same temperature.

US 2009/060805 A1 discloses an apparatus for catalytic methane decomposition, which in one embodiment comprises a first section where carbon seed particles are produced and which comprises a methane input and an output for carbon seeds and a second, catalytic section which receives the carbon seeds from the first section and further comprises a methane inlet, a hydrogen outlet at the top and a carbon outlet at the bottom.

US 5 899 175 A discloses a power generation system which in one embodiment includes a primary and a secondary pyrolysis reactor, wherein the secondary pyrolysis reactor receives the output gas stream from the primary pyrolysis reactor. The secondary pyrolysis reaction runs at a higher temperature so as to further pyrolyze the hydrocarbons and strip hydrogen therefrom. The resulting hydrogen is transferred to a fuel cell of the power generation system and used therein for generating electricity.

### SUMMARY

According to the present invention, a production system is provided that includes a first reaction chamber and a second reaction chamber. The first reaction chamber is configured to receive a first hydrocarbon stream therein through an input port and to form carbon seeds and hydrogen gas therein via hydrocarbon pyrolysis of the first hydrocarbon stream. The second reaction chamber includes a first input port and a second input port. The second reaction chamber is configured to receive the carbon seeds through the first input port and a second hydrocarbon stream through the second input port, and the second reaction chamber is configured to form carbon product elements and additional hydrogen gas in the second reaction chamber via hydrocarbon pyrolysis of the second hydrocarbon stream. The carbon product elements represent the carbon seeds with additional carbon structure grown on the carbon seeds. The production system further includes a solid particle mover configured to convey the carbon product elements from an output port of the second reaction chamber towards the first input port of the second reaction chamber to reintroduce the carbon product elements into the second reaction chamber.

### BRIEF DESCRIPTION OF THE DRAWINGS

The present inventive subject matter will be better understood from reading the following description of non-limiting embodiments, with reference to the attached drawings, wherein below:
Figure 1 is a perspective view of a production system according to an embodiment.
Figure 2 is an enlarged illustration showing a portion of a duct of the production system indicated by arrow A in Figure 1;
Figure 3 is an enlarged illustration showing a portion of another duct of the production system indicated by arrow B in Figure 1;
Figure 4 illustrates a seeding chamber and a growth chamber of the production system according to an alternative embodiment; and
Figure 5 is a flow chart for a method of producing power and generating carbon product elements.

### DETAILED DESCRIPTION

The embodiments described herein provide a production system and method for utilizing hydrocarbon pyrolysis to accomplish power generation. One or more embodiments in this disclosure describe a two-stage pyrolysis process for producing both hydrogen and a valuable carbon product. The hydrogen can be purified and used in H₂-powered vehicles, fed to H₂ fuel cells, and can also be used as fuel source in a downstream power generation system to produce electrical and/or mechanical power with significantly reduced carbon dioxide emissions. The valuable carbon product can be sold to offset the cost of energy needed to conduct the pyrolysis reaction, such as costs for providing heat sources and/or catalysts. By producing the valuable carbon product that can offset at least some of the costs associated with performing pyrolysis, the embodiments described herein can be utilized to efficiently and economically generate power without contributing to greenhouse gases. The production system and method described herein may also be able to be implemented in conjunction with other power generation systems, such as renewable sources and conventional combustion of natural gas or fossil fuels.

The carbon products described herein, such as carbon seeds, additional carbon structure, and carbon product elements, represent valuable carbon products. Valuable carbon products have solid carbon morphologies and/or molecular structures that can be utilized in various applications and/or sold to at least partially offset the cost of performing the hydrocarbon pyrolysis. For example, the carbon products may have relatively uniform molecular and/or higher order structures. Some non-limiting valuable carbon products may include graphene, graphite, carbon nanotubes, carbon fibers, semicrystalline or graphitic carbon, and/or the like. Some non-limiting applications for these carbon products may include use in energy storage (e.g., batteries), solar panels, nuclear reactors, personal electronic devices, refractory applications (such as crucibles), and the like.

The two-stage pyrolysis process includes two different hydrocarbon pyrolysis reactions. For the first step, a first hydrocarbon stream is directed to a first reaction chamber or zone, and pyrolysis of the first hydrocarbon stream within the first reaction chamber produces hydrogen gas and small solid carbon products, or carbon seeds (of a valuable carbon product). For this reason, the first reaction chamber may also be referred to as the seeding chamber. The formation of the carbon seeds may be controlled to yield carbon seeds having desirable microstructures. For example, the carbon seeds may be graphite structures with multiple stacked layers of six-atom rings. The carbon seeds are then directed from the seeding chamber to a second reaction chamber or zone. Optionally, the hydrogen gas and residual, unreacted hydrocarbons may accompany the carbon seeds to the second reaction chamber or may be separated and sent to a power generation system instead of being directed to the second reaction chamber. A second hydrocarbon stream is directed into the second reaction chamber. The second step of the two-stage process involves performing pyrolysis of the second hydrocarbon stream and residual hydrocarbons from the first stream.

The pyrolysis reaction within the second reaction chamber produces additional hydrogen gas and causes additional carbon structures to be grown on the carbon seeds. The carbon seeds may serve as templates for the growth of additional carbon with a particular type of allotropic composition. The additional carbon structures may advantageously retain the same morphology or microstructure of the particular carbon seeds on which the additional carbon is formed. For example, if a given carbon seed has a graphite structure with multiple stacked layers of six-atom rings, then the additional carbon that bonds to that carbon seed continues the pattern and forms additional six-atom rings in the existing layers and/or in new layers stacked on the existing layers. The additional carbon bonds to the carbon seeds to produce enlarged carbon structures surrounding the seeds, and the combined structures are referred to herein as carbon product elements. Therefore, by controlling the first pyrolysis reaction in the seeding chamber to produce carbon seeds with desirable morphology characteristics, such as molecular uniformity, the carbon product elements produced in the growth chamber via the second pyrolysis reaction may have the same or at least similar morphologies as the seeds. Due to the desirable traits, the carbon product elements are sufficiently valuable to be able to collect and utilize (e.g., monetize) the carbon product elements. For example, the carbon product elements may be sold for offsetting the cost of performing the pyrolysis reactions.

The second reaction chamber may produce rapid growth of the carbon structures/products while retaining the original microstructure of the seeds. For this reason, the second reaction chamber may be referred to as a growth chamber. Alternatively, the carbon structures grown on the carbon seeds may not be the same allotropic structure as the seeds, but the combination of the seed and the growth conditions produces high value carbon. In a non-limiting example, graphene powder can be utilized as a seed, and graphite clusters can be grown on the seeds under specific growth chamber conditions. The resulting carbon product element may not have the same morphology or composition as the seed but may still have relatively high economic value. Another non-limiting example may include using nano-carbon or nano-metallic-ring structures as seeds to grow nano-tubes.

The hydrogen gas produced by the two pyrolysis reactions may be purified and collected for distribution or may be directed to a power generation system for using the hydrogen as a fuel source to produce power. The power generation system may be a fuel cell, a combustion engine, a gas turbine, a power plant, or the like.

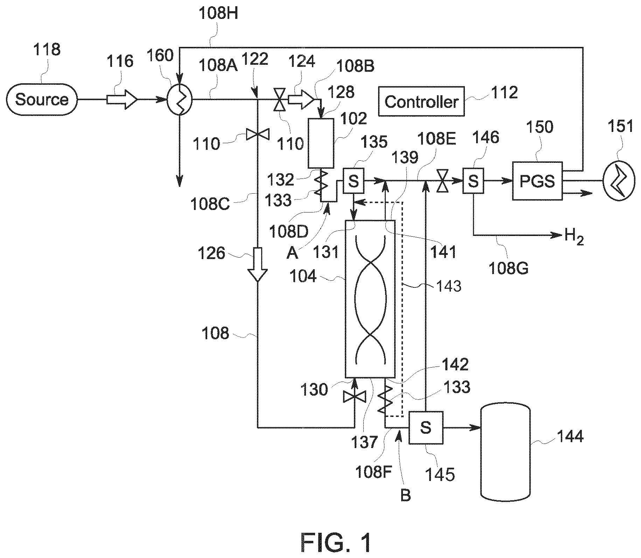

Figure 1 is a schematic view of a production system 100 according to an embodiment. The production system 100 includes a first reaction chamber 102 (or seeding chamber 102), a second reaction chamber 104 (or growth chamber 104), and a network 106 of ducts 108. The network 106 of ducts 108 is used to guide materials, such as gases and solids, through the production system 100. In the illustrated embodiment, the production system 100 may also include control devices and a controller 112 that is configured to control operation of the control devices. The control devices may include a plurality of valves 110, pumps, solid particle movers (e.g., augers, conveyor belts, etc.), fans, linear actuators, and/or the like. The valves 110 and other control devices are configured to control the flow or movement of the materials through the production system 100. The controller 112 is operably connected to the valves 110 and other control devices via wired or wireless communication pathways. The controller 112 is configured to actuate the valves 110, such as by opening and closing the valves 110, to selectively control the movement of materials through the production system 100. The valves 110 may be various types of valves, such as solenoid valves, coaxial valves, ball valves, butterfly valves, and the like. Some of the valves 110 may be a different type than other valves 110.

The controller 112 includes one or more processors that are configured to operate based on programmed instructions. The controller 112 may include additional features or components, such as a data storage device (e.g., memory), an input/output (I/O) device, and/or a wireless communication device. The memory may store programmed instructions (i.e., software) that dictates the functioning of the one or more processors. For example, the memory may store set-up parameters and reaction parameters for operating the production system 100 to generate power and valuable carbon product elements. The controller 112 may implement the programmed instructions and manually-input commands to autonomously operate the production system 100.

An inlet duct 108A receives an incoming hydrocarbon stream 116 from a hydrocarbon source 118. The source 118 may represent a tank, a pipeline, or the like. The incoming hydrocarbon stream 116 includes one or more hydrocarbon compounds, such as methane, propane, ethane, and the like. Optionally, the stream 116 may be natural gas, which primarily includes methane but also includes smaller amounts of additional hydrocarbon compounds. Optionally, the stream 116 may be pure methane. The incoming hydrocarbon stream 116 may be fully or at least substantially in the gas phase.

The incoming hydrocarbon stream 116 is directed within a duct 108A to a splitting location 122. The hydrocarbon stream 116 is divided into a first hydrocarbon stream 124 and a second hydrocarbon stream 126 at the splitting location 122. The controller 112 may actuate one or more valves 110 at or proximate to the splitting location 122 to control how the stream 116 is distributed into the two branching hydrocarbon streams 124, 126. The first hydrocarbon stream 124 (also referred to as first stream 124) is directed to the seeding chamber 102. For example, a duct 108B is connected to the splitting location 122 and extends from the splitting location 122 to an input port 128 of the seeding chamber 102 to convey the first stream 124 directly to the seeding chamber 102. The second hydrocarbon stream 126 (also referred to as second stream 126) is directed to the growth chamber 104. The second stream 126 bypasses the seeding chamber 102. For example, a duct 108C connected to the splitting location 122 extends from the splitting location 122 to an input port 130 of the growth chamber 104 to convey the second stream 126 from the splitting location 122 to the growth chamber 104. In an embodiment, the controller 112 allocates most of the incoming hydrocarbon stream 116 to the second stream 126 that bypasses the seeding chamber 102 and proceeds directly to the growth chamber 104. For example, the valves 110 may be controlled to distribute between 5 and 45 weight percent (wt %) of the incoming hydrocarbon stream 116 to the first stream 124 and the remainder to the second stream 126.

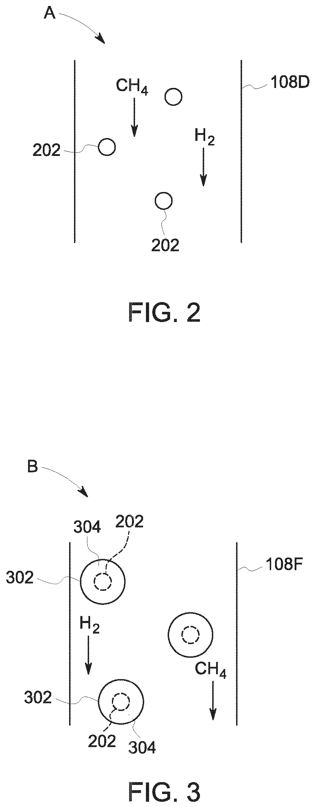

A first pyrolysis reaction is performed on the first stream 124 within the seeding chamber 102 to produce solid carbon seeds 202 (shown in Figure 2) and hydrogen gas. For example, the pyrolysis reaction breaks the carbon-hydrogen bonds in the presence of heat and/or catalysts to directly produce the solid carbon seeds 202 and the hydrogen gas, without the co-production of carbon dioxide. The seeding chamber 102 may inject multiple forms of heat and/or plasma and solids to catalyze the formation of carbon seeds 202. The seeding chamber 102 may be or include a furnace that is configured to withstand high temperatures. The heat sources may include thermal plasmas. The catalysts may include solid-state catalysts such as metallic materials (e.g., lead, nickel, bismuth, and the like), ceramic materials, specialized carbon/carbide surfaces, and/or combinations thereof. The heat sources and/or catalysts may be pre-loaded into the seeding chamber 102 prior to introducing the first stream 124. Alternatively, the heat sources and/or catalysts may be injected or introduced into the seeding chamber 102 concurrent with or subsequent to the first stream 124.

The products of the pyrolysis reaction (e.g., the carbon seeds 202 and hydrogen gas) as well as any unreacted hydrocarbons are directed from the seeding chamber 102. In the illustrated embodiment, these materials are conveyed within a duct 108D that extends from an output port 132 of the seeding chamber 102 to an input port 131 of the growth chamber 104. In the illustrated embodiment, the output port 132 is disposed at or proximate to a bottom of the seeding chamber 102 (e.g., relative to the direction of gravity). The solid carbon seeds 202 may collect along the bottom of the seeding chamber 102 due to gravity and the density of the seeds 202. Optionally, a solid particle mover 133, such as an auger, a conveyor belt, or the like, is used to transport the carbon seeds 202 from the seeding chamber 102 towards the input port 131. For example, the mover 133 may convey the seeds 202 into and/or through the duct 108D. Optionally, the seeding chamber 102 may function as either a batch reactor or a continuous reactor. For example, as a continuous reactor, the first stream 124 is continuously supplied to the seeding chamber 102 to maintain the pyrolysis reaction. The carbon seeds 202 produced during the reaction are continuously or periodically removed from the bottom of the seeding chamber 102 via the solid particle mover 133 and fed to the input port 131 of the growth chamber 104. Alternatively, as a batch reactor, the carbon seeds 202 may be collectively moved from the bottom of the seeding chamber 102 to the growth chamber 104 after the pyrolysis reaction is completed.

Figure 2 is an enlarged illustration showing a portion of the duct 108D indicated by arrow A in Figure 1. The duct 108D contains several carbon seeds 202 as well as hydrogen gas (H₂) and methane (CH₄). The hydrogen gas is produced via the pyrolysis reaction. The methane represents unreacted hydrocarbons from the first stream 124. The carbon seeds 202 produced in the pyrolysis reaction within the seeding chamber 102 may have a relatively large surface area. For example, the surface area of the carbon seeds 202 may exceed 50 m²/g. The surface area optionally may be up to or exceeding 1000 m²/g. Optionally, one or more of the catalysts and/or heat sources within the seeding chamber 102 may also be conveyed to the growth chamber 104 within the duct 108D or via another transfer mechanism.

With continued reference to Figure 1, the production system 100 optionally includes a separator device 135 disposed between the seeding chamber 102 and the growth chamber 104. The separator device 135 may be a gas-solid phase separator configured to separate the gases, such as hydrogen and methane, from the carbon seeds 202. From the separator device 135, the carbon seeds 202 may be deposited into the growth chamber 104 via the input port 131 and the separated gas may bypass the growth chamber 104. For example, the gas may be directed to a power generation system 150, as described herein.

The seeding chamber 102 and the growth chamber 104 may be heterogeneous catalytic reaction chambers. Optionally, the growth chamber 104 may have a different size and/or may be a different type of reactor than the seeding chamber 102. For example, the growth chamber 104 may be larger than the seeding chamber 102, with a greater volume and/or capacity than the seeding chamber 102. Each of the seeding chamber 102 and the growth chamber 104 may be a respective falling packed bed reaction chamber, a fluidized bed reaction chamber, a fixed bed reaction chamber, a trickle-bed or rainfall-style reaction chamber, or the like. The seeding chamber 102 and/or the growth chamber 104 may include baffles, divider walls, flow channels, propellers, and/or the like therein to increase the molecular interactions between the reactants.

The second hydrocarbon stream 126 within the duct 108C is directed into the growth chamber 104 through the input port 130. In the illustrated embodiment, the input port 130 is separate from the input port 131. The growth chamber 104 is oriented such that the input port 130 is below the input port 131 relative to the direction of gravity. For example, the input port 130 through which the second stream 126 passes may be disposed at or proximate to a bottom 137 of the growth chamber 104, and the input port 131 through which the carbon seeds 202 pass may be at or proximate to a top 139 of the growth chamber 104. Inside the growth chamber 104, the second hydrocarbon stream 126 mixes with the carbon seeds 202, hydrogen gas, and unreacted hydrocarbons from the seed chamber 102 (unless the hydrogen and hydrocarbons have been separated from the carbon seeds 202 at the separator 135 and directed elsewhere). The second stream 126, which is a gas, entering through the port 130 may rise towards the top 139 of the growth chamber 104 as the solid carbon seeds 202 fall towards the bottom 137, providing countercurrent flow of gasses and solid carbon products. In the illustrated embodiment, the growth chamber 104 is a falling packed bed reaction chamber.

A second hydrocarbon pyrolysis reaction is performed within the growth chamber 104. The pyrolysis in the growth chamber 104 uses the second stream 126 and any unreacted hydrocarbons present from the first stream 124 to generate additional hydrogen gas and carbon product elements 302 (shown in Figure 3). The carbon product elements 302 represent the carbon seeds 202 having additional carbon structures 304 grown on the carbon seeds 202. For example, the second pyrolysis reaction causes carbon atoms to bond to the carbon seeds 202, forming the additional carbon structures 304 that surround the seeds 202. The resulting carbon structures are referred to herein as carbon product elements 302.

Although the underlying chemical reaction within the growth chamber 104 may be the same as in the seeding chamber 102, the pyrolysis performed within the growth chamber 104 may differ from the pyrolysis performed within the seeding chamber 102. For example, the growth chamber 104 may receive a greater amount or flow rate of hydrocarbons than the seeding chamber 102 due to most of the incoming stream 116 being diverted into the second stream 126. The growth chamber 104 optionally may include different catalysts and/or heat sources than the seeding chamber 102. Furthermore, the process conditions in the growth chamber 104 differ from the process conditions in the seeding chamber 102. The process conditions include temperature and may include pressure, humidity, gas flow rate, solid flow rate, and/or the like. The process conditions in the growth chamber 104 vary substantially from the process conditions in the seeding chamber 102, such that one or more of the process conditions in the growth chamber 104 differ from the corresponding one or more process conditions in the seeding chamber 102 by more than a designated threshold range. The threshold range may be within 10%, 20%, 30%, or the like of the condition value of the seeding chamber 102. In a non-limiting example, the gas temperature in the seeding chamber 102 may be as high as 3000 °C to 4000 °C (the wall temperature of the seeding chamber 102 may be lower). The gas and/or wall temperature in the growth chamber 104 is lower than the gas temperature in the seeding chamber 102, such as in the range of 1000 °C to 1500 °C. The process conditions may be controlled via the selection of specific catalysts or other components within the chambers, and the controller 112 may also control the conditions by selectively operating devices such as cooling systems, heating devices, pumps, fans, and/or the like. The conditions may be specifically selected for each of the seeding chamber 102 and the growth chamber 104 based on the type of carbon production that is desired in the respective chamber (e.g., seed generation or structural growth).

Gases including hydrogen formed via the pyrolysis reaction and any unreacted hydrocarbons may exit the growth chamber 104 through an output port 141 that is located at or proximate to the top 139 of the growth chamber 104. The gases may be directed within a duct 108E. The hydrogen gas in the duct 108E may represent the combined hydrogen generated by both pyrolysis reactions. Optionally, at least one valve 110 may be located along the duct 108E or at the output port 141 to control the flow of the gases from the growth chamber 104. The solid carbon product elements 302 may exit the growth chamber 104 through an output port 142 that is located at or proximate to the bottom 137 of the chamber 104. For example, the carbon product elements 302 may settle at the bottom 137 due to gravity. Another solid particle mover 133, such as an auger, a conveyor belt, or the like, may be used to transport the carbon product elements 302 from the growth chamber 104. The carbon product elements 302 may be conveyed through a duct 108F extending from the output port 142. The growth chamber 104 may be operated as a continuous reactor that maintains the pyrolysis reaction for an extended period of time to generate streams of products, or as a batch reactor that periodically performs pyrolysis to generate hydrogen gas and carbon product elements 302 in batches.

Figure 3 is an enlarged illustration showing a portion of the duct 108F indicated by arrow B in Figure 1. The duct 108F contains several carbon product elements 302 and may also include some hydrogen gas (H₂) and/or unreacted methane (CH₄). As described above, the majority of the gases exit the growth chamber 104 through the output port 141 at the top 139 (instead of through the output port 142 into the duct 108F). The carbon product elements 302 include the additional carbon structures 304 grown on (e.g., bonded to) the carbon seeds 202. The carbon seeds 202 may serve as templates for controlling the morphology of the additional carbon structures 304. The additional carbon structures 304 grown on the carbon seeds 202 may have that same (or similar) type of allotropic composition and/or morphology as the respective carbon seeds 202 on which the carbon structures 304 are bonded. For example, the new carbon atoms may bond to the atoms on an existing seed 202 to continue the molecular pattern or structure of the seed 202. As a result, the carbon product element 302 are larger in size than the seeds 202 but may have the same or similar molecular and/or higher-order structures as the seeds 202. The carbon product elements 302 may have the same or similar uniformity and/or purity as the seeds 202 as well. Optionally, some additional carbon may also be grown on catalysts within the growth chamber 104.

With reference back to Figure 1, the production system 100 is configured to cycle the carbon product elements 302 through the growth chamber 104 multiple times to increase the mass of the carbon product elements 302. At least some of the carbon product elements 302 exiting the growth chamber 104 are directed back towards the input port 131 to re-enter the growth chamber 104. Once reintroduced into the growth chamber 104, the pyrolysis reaction may be continued or restarted to cause additional carbon structure to grow on the carbon product elements 302. Optionally, the carbon product elements 302 may be recycled through the growth chamber 104 multiple times until an average size of the carbon product elements 302 reaches a designated threshold or range. One or more control devices and/or ducts are used to direct at least some of the carbon product elements 302 exiting the output port 142 back to the input port 131. In particular, the solid particle mover 133 and/or another solid particle mover (e.g., a conveyor system) transports the carbon product elements 302 from the output port 142 along a route 143 to the input port 131 at or proximate to the top 139 of the growth chamber 104 to reintroduce the carbon product elements 302 into the growth chamber 104. The route 143 may include or represent a duct, a conveyor belt, a track, an elevator, or the like.

Upon exiting the growth chamber 104, any gases entrenched with the carbon product elements 302 may be separated from the carbon product elements 302 within a separator device 145. The separator device 145 may be a gas-solid phase separator. The gases from the separator device 145 may be directed to the duct 108E.

The solid carbon product elements 302 may be directed from the separator device 145 to a storage container 144 for collecting the carbon product elements 302. The carbon product elements 302 collected in the storage container 144 may represent valuable carbon products that can be utilized to offset costs of performing the pyrolysis reactions, such as the costs of heating, catalysts, and/or obtaining the incoming hydrocarbon stream 116, and to offset the fact that hydrogen has a lower energy content than the incoming hydrocarbon. For example, the carbon product elements 302 may be sold to manufacturers for utilizing the carbon product elements 302 in various industrial applications, such as energy storage devices, consumer electronics, refractory applications, power generation applications, and/or the like. By selectively controlling the morphology of the carbon product elements 302 throughout the build process, including the uniformity and purity, the carbon product elements 302 may be more valuable than conventional carbon byproducts of pyrolysis reactions.

The production system 100 optionally includes a gas-gas separator device 146 along the duct 108E. The gas-gas separator device 146 may include or represent a ceramic membrane that is utilized to extract pure hydrogen from the hydrogen-methane stream within the duct 108E. For example, the gas stream entering the separator device 146 may have a range of hydrogen purity from 80-95 mol %. The pure hydrogen gas that is extracted by the separator device 146 is routed through a duct 108G and can be utilized to power vehicles, fuel cells, and other uses in a "hydrogen economy." For example, the pure hydrogen may be stored in a tank for sale and/or later use. The remaining hydrogen, methane, and any other gases within the duct 108E may be directed to a power generation system 150 of the production system 100. The power generation system 150 utilizes the hydrogen and remaining methane as fuel to generate power, such as mechanical power or electrical power. The power generation system 150 may be located at, or represent, a power plant. The power generation system 150 may include a combustion engine, a generator, a turbine, a fuel cell, or the like. A valve 110 disposed along the duct 108E may control the flow of the gases to the power generation system 150. The carbon product elements 302 are not present in the duct 108E and are not directed to the power generation system 150.

The gases at the power generation system 150 may combust or otherwise react to produce power. For example, the hydrogen gas may react with oxygen in an exothermic reaction to produce power with a byproduct of water. In the illustrated embodiment, the power generation system 150 generates electrical power in the form of electric current (e.g., electricity) 151 that can be supplied to a power grid, an electrical storage device (e.g., one or more batteries), or directly to a load that is being powered. In an alternative embodiment, the power generation system 150 may generate mechanical power that is used to provide motive force for propelling a vehicle, such as an automobile.

In one or more embodiments, the production system 100 is configured to convert most (e.g., more than 50 mol %) of the methane and other hydrocarbons in the incoming hydrocarbon stream 116 by the pyrolysis reactions, such that the unreacted hydrocarbons present in the duct 108E may represent less than 50 mol % of the incoming hydrocarbons. For example, the production system 100 may have a conversion rate of at least 80 mol % or at least 90 mol %. As a result, the feed to the power generation system 150 may be mostly hydrogen with a small fraction of methane, such as less than 20 wt % methane or less than 10 wt % methane.

Due to the small percentage of methane in the gases supplied to the power generation system 150, the power generation system 150 may emit substantially less carbon dioxide than conventional power-generating systems that combust hydrocarbon fuels. For example, the production system 100 may reduce carbon dioxide emissions by at least 80 % over known systems. In one or more embodiments, the power generation system 150 is an integrated component of the production system 100 such that the hydrogen gas generated from pyrolysis can be directly conveyed to the power generation system 150 without first storing the hydrogen and then transporting the hydrogen to a power generator. Alternatively, the hydrogen gas from the separator device 146 may be stored within a container for future use and/or sale.

The reaction of the hydrogen gas at the power generation system 150 is exothermic and generates heat. Optionally, at least some of the heat exhausted from the power generation system 150 can be used to raise the temperature of the incoming hydrocarbon stream 116 prior to entering the reaction chambers 102, 104. For example, the production system 100 may include a heat exchanger 160 that receives waste heat (e.g., hot air or other gases) exhausted by the power generation system 150 via a duct 108H and the incoming hydrocarbon stream 116. The incoming hydrocarbon stream 116 absorbs at least some of the waste heat within the heat exchanger 160 which increases the temperature of the hydrocarbon stream 116. By pre-heating the hydrocarbon stream 116, the pyrolysis reactions in the reaction chambers 102, 104 may require less external heating than if the hydrocarbon stream 116 is not pre-heated. As a result, the thermal recycling within the heat exchanger 160 may improve the efficiency of the production system 100 (and reduce costs). In addition to, or as an alternative to, the heat exchanger 160, heat may be input into seeding chamber 102 and/or the growth chamber 104 through internal combustion of fuels and/or non-contact methods such as induction or microwave heating of the carbon particles and gases.

In the illustrated embodiment, the seeding chamber 102 is discrete and spaced apart from the growth chamber 104. The duct 108D extends between the two chambers 102, 104 to convey material from the seeding chamber 102 to the growth chamber 104.

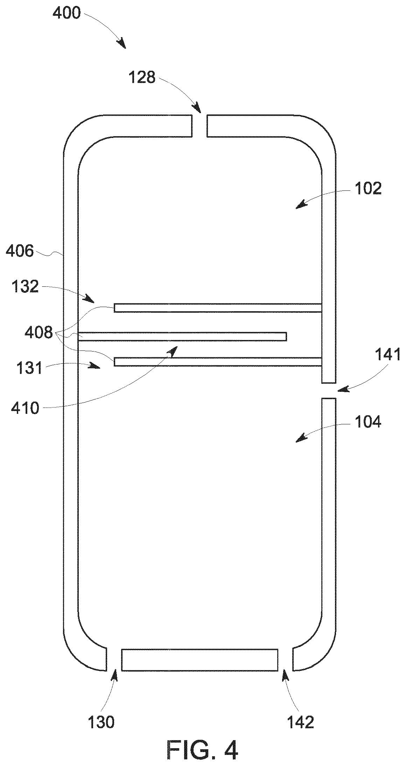

Figure 4 illustrates the seeding chamber 102 and the growth chamber 104 of the production system 100 according to an alternative embodiment. In the illustrated embodiment, the seeding chamber 102 and the growth chamber 104 are two separate areas or zones of a single reactor 400. For example, both chambers 102 and 104 are contained within a common housing 406. The seeding chamber 102 is separated from the growth chamber 104 by one or more divider walls 408 or baffles. In the illustrated embodiment, three divider walls 408 are disposed between the two chambers 102, 104. The divider walls 408 are positioned and oriented to define a tortuous flow path 410 between the chambers 102, 104, which may prohibit backward propagation of material from the growth chamber 104 into the seeding chamber 102. The carbon seeds 202, hydrogen, and unreacted methane may traverse the flow path 410 from the seeding chamber 102 to the growth chamber 104.

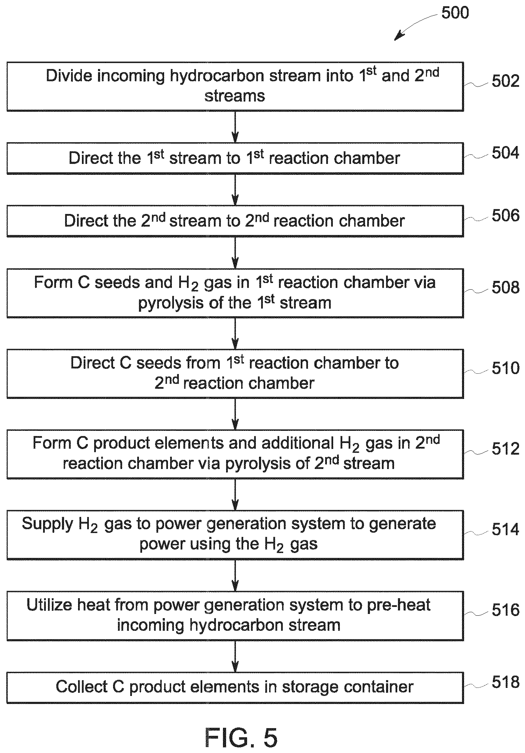

Figure 5 is a flow chart for a method 500 of producing power and generating carbon product elements. The method 500 is performed utilizing the production system 100 shown in Figure 1. One or more of the steps of the method 500 may be carried out by the controller 112 of the production system 100. Optionally, the method 500 may include additional steps not shown in Figure 5, fewer steps than shown in Figure 5, different steps than shown in Figure 5, and/or the steps may be performed in a different order than shown in Figure 5.

At 502, an incoming hydrocarbon stream 116 is divided into a first hydrocarbon stream 124 and a second hydrocarbon stream 126 at a splitting location 122. At 504, the first hydrocarbon stream 124 is directed from the splitting location 122 to a first reaction chamber 102 (e.g., a seeding chamber). At 506, the second hydrocarbon stream 126 is directed from the splitting location 122 to a second reaction chamber 104 (e.g., a growth chamber). The second stream 126 bypasses the first reaction chamber 102.

At 508, carbon seeds 202 and hydrogen gas are formed in the first reaction chamber 102 via pyrolysis of the first hydrocarbon stream 124. At 510, the carbon seeds 202 are directed from the first reaction chamber 102 to the second reaction chamber 104. Optionally, the hydrogen gas that is formed may also be directed to the second reaction chamber 104. At 512, carbon product elements 302 and additional hydrogen gas are formed in the second reaction chamber 104 via hydrocarbon pyrolysis of the second hydrocarbon stream 126. The carbon product elements 302 represent the carbon seeds 202 with additional carbon structure 304 grown on the carbon seeds 202. The additional carbon structure 304 grown on each of the carbon seeds 202 in the second reaction chamber 104 may have the same structural composition as the respective carbon seed 202 on which the additional carbon structure 304 is grown. Optionally, the method 500 includes controlling conditions within at least one of the first reaction chamber 102 or the second reaction chamber 104 such that the first reaction chamber 102 has a lower temperature and, if desired, a different pressure than the second reaction chamber 104.

At 514, the hydrogen gas from the second reaction chamber 104 is supplied to a power generation system 150 for using the hydrogen gas as a fuel to generate power, such as electrical power, mechanical power, or the like. At 516, waste or exhaust heat from the power generation system 150 is directed to a heat exchanger 160 disposed in a path of the incoming hydrocarbon stream 116 to transfer the heat to the hydrocarbon stream(s) prior to the first hydrocarbon stream 124 entering the first reaction chamber 102. At 518, the carbon product elements 302 are collected in a storage container 144. The collected carbon product elements 302 may be valuable such that the elements 302 can be utilized to offset operating costs of performing the method 500.

At least one technical effect of the embodiments described herein includes producing carbon products that have greater uniformity, greater purity, and/or greater value via hydrocarbon pyrolysis than known industrial applications of hydrocarbon pyrolysis. For example, by incorporating two different pyrolysis reaction zones, the first zone can be controlled to produce seed carbon with one or more structures that would offer a high value product (e.g., semi crystalline or graphitic carbon materials for energy storage applications and the like) while concurrently producing hydrogen. Then, in the downstream growth zone, the same carbon seeds and/or catalysts can be used as templates to efficiently grow additional high value carbon while producing additional hydrogen. The hydrogen can be utilized as a fuel for generating power with limited carbon emissions. The high value carbon products may be utilized in various industrial applications and/or by selling to offset costs.

According to the invention, a production system is provided that includes a first reaction chamber and a second reaction chamber. The first reaction chamber is configured to receive a first hydrocarbon stream therein through an input port and to form carbon seeds and hydrogen gas therein via hydrocarbon pyrolysis of the first hydrocarbon stream. The second reaction chamber includes a first input port and a second input port. The second reaction chamber is configured to receive the carbon seeds through the first input port and a second hydrocarbon stream through the second input port, and the second reaction chamber is configured to form carbon product elements and additional hydrogen gas in the second reaction chamber via hydrocarbon pyrolysis of the second hydrocarbon stream. The carbon product elements represent the carbon seeds with additional carbon structure grown on the carbon seeds.

Optionally, the first and second reaction chambers are heterogeneous catalytic reaction chambers.

Process conditions within the second reaction chamber differ from corresponding process conditions within the first reaction chamber by more than a designated threshold range.

Optionally, the first and second input ports are spaced apart along a height of the second reaction chamber such that a top of the second reaction chamber is disposed closer to the first input port than the second input port and a bottom of the second reaction chamber is disposed closer to the second input port than the first input port. Optionally, the second reaction chamber includes a first output port disposed at or proximate to the top of the second reaction chamber, wherein at least a majority of the hydrogen gas is configured to exit the second reaction chamber through the first output port.

Optionally, each of the first reaction chamber and the second reaction chamber is a respective falling packed bed reaction chamber, fluidized bed reaction chamber, a fixed bed reaction chamber, or a trickle-bed reaction chamber.

Optionally, the production system also includes a power generation system fluidly connected to an output port of the second reaction chamber. The power generation system is configured to receive the hydrogen gas exiting the second reaction chamber for using the hydrogen gas to generate electrical power. Optionally, the power generation system includes a fuel cell, a combustion engine, a generator, and/or a turbine. Optionally, the production system also includes a heat exchanger and a duct connecting the power generation system to the heat exchanger. The heat exchanger is disposed in a path of the first and/or second hydrocarbon streams upstream of the first and second reaction chambers. The duct is configured to direct heat from the power generation system to the heat exchanger for preheating the first and/or second hydrocarbon streams.

The production system also includes a solid particle mover configured to convey the carbon product elements from an output port of the second reaction chamber towards the first input port of the second reaction chamber to reintroduce the carbon product elements into the second reaction chamber.

Optionally, the production system also includes a solid particle mover configured to convey the carbon product elements from the second reaction chamber towards a storage container. Optionally, the production system also includes a separator device disposed between the second reaction chamber and the storage container. The separator device is configured to separate hydrogen gas that is entrained with the carbon product elements from the carbon product elements.

Optionally, the production system also includes a network of ducts and one or more valves disposed at a splitting location in the network of ducts. A first duct in the network extends from the splitting location to the input port of the first reaction chamber, and a second duct in the network extends from the splitting location to the second input port of the second reaction chamber, bypassing the first reaction chamber. The one or more valves are selectively controlled to divide an incoming hydrocarbon stream into the first hydrocarbon stream and the second hydrocarbon stream at the splitting location, direct the first hydrocarbon stream into the first duct, and direct the second hydrocarbon stream into the second duct. Optionally, the one or more valves are selectively controlled to distribute a majority of the incoming hydrocarbon stream into the second duct to form the second hydrocarbon stream.

Optionally, the additional carbon structure grown on each of the carbon seeds in the second reaction chamber has the same structural composition as the respective carbon seed on which the additional carbon structure is grown.

A method of operating the production system includes forming carbon seeds and hydrogen gas in the first reaction chamber via hydrocarbon pyrolysis of a first hydrocarbon stream. The method also includes directing the carbon seeds from the first reaction chamber to the second reaction chamber and forming carbon product elements and additional hydrogen gas in the second reaction chamber via hydrocarbon pyrolysis of a second hydrocarbon stream. The carbon product elements represent the carbon seeds with additional carbon structure grown on the carbon seeds.

Optionally, the method also includes collecting the carbon product elements in a storage container.

Optionally, the carbon product elements are directed to the second reaction chamber through a first input port of the second reaction chamber. The method also includes supplying the second hydrocarbon stream to the second reaction chamber through a second input port of the second reaction chamber. The first input port is disposed closer to a top of the second reaction chamber than the second input port (e.g., the distance between the first input port and the top is less than the distance between the second input port and the top).

Optionally, the method also includes supplying the hydrogen gas from the second reaction chamber to a power generation system through a duct. The power generation system is configured for using the hydrogen gas to generate electrical power.

Optionally, the method also includes dividing an incoming hydrocarbon stream into the first hydrocarbon stream and the second hydrocarbon stream at a splitting location, directing the first hydrocarbon stream from the splitting location to the first reaction chamber, and directing the second hydrocarbon stream from the splitting location to the second reaction chamber, bypassing the first reaction chamber.

Optionally, directing the carbon seeds from the first reaction chamber to the second reaction chamber includes controlling a solid particle mover to convey the carbon product elements from a bottom of the first reaction chamber out of the first reaction chamber through an output port towards a first input port of the second reaction chamber.

In at least one embodiment, a production system is provided that includes a first reaction chamber, a second reaction chamber, and a power generation system. The first reaction chamber is configured to receive a first hydrocarbon stream therein through an input port and to form carbon seeds and hydrogen gas therein via hydrocarbon pyrolysis of the first hydrocarbon stream. The second reaction chamber has a top and a bottom that is opposite the top. The second reaction chamber includes a first input port and a first output port that are both disposed at or proximate to the top and a second input port disposed at or proximate to the bottom. The second reaction chamber is configured to receive the carbon seeds through the first input port and a second hydrocarbon stream through the second input port. The second reaction chamber is configured to form carbon product elements and additional hydrogen gas in the second reaction chamber via hydrocarbon pyrolysis of the second hydrocarbon stream. The carbon product elements represent the carbon seeds with additional carbon structure grown on the carbon seeds. The power generation system is fluidly connected to the first output port of the second reaction chamber via a duct and is configured to receive the hydrogen gas exiting the second reaction chamber for using the hydrogen gas to generate electrical power.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

The above description is illustrative and not restrictive. For example, the above-described embodiments (and/or aspects thereof) may be used in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are example embodiments. Many other embodiments will be apparent to those of ordinary skill in the art upon reviewing the above description. The scope of the subject matter described herein should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects.

This written description uses examples to disclose several embodiments of the subject matter set forth herein, including the best mode, and also to enable a person of ordinary skill in the art to practice the embodiments of disclosed subject matter, including making and using the system. The patentable scope of the subject matter described herein is defined by the claims, and may include other examples that occur to those of ordinary skill in the art. Such other examples are intended to be within the scope of the claims if they have structural elements that do not differ from the literal language of the claims.

## Claims

1. A production system (100) comprising:
a first reaction chamber (102) configured to receive a first hydrocarbon stream (124) therein through an input port (128) and to form carbon seeds (202) and hydrogen gas therein via hydrocarbon pyrolysis of the first hydrocarbon stream;
a second reaction chamber (104) including a first input port (131) and a second input port (130), the second reaction chamber configured to receive the carbon seeds through the first input port and a second hydrocarbon stream (126) through the second input port, the second reaction chamber configured to form carbon product elements (302) and additional hydrogen gas in the second reaction chamber via hydrocarbon pyrolysis of the second hydrocarbon stream, wherein the carbon product elements represent the carbon seeds with additional carbon structure (304) grown on the carbon seeds; and
a solid particle mover (133) configured to convey the carbon product elements (302) from an output port (142) of the second reaction chamber (104) towards the first input port (131) of the second reaction chamber (104) to reintroduce the carbon product elements into the second reaction chamber (104).

2. The production system (100) of claim 1, wherein the first and second reaction chambers (102, 104) are heterogeneous catalytic reaction chambers.

3. The production system (100) of claim 1, wherein the first and second input ports (131, 130) are spaced apart along a height of the second reaction chamber (104) such that a top (139) of the second reaction chamber is disposed closer to the first input port than the second input port and a bottom (137) of the second reaction chamber is disposed closer to the second input port than the first input port.

4. The production system (100) of claim 3, wherein the second reaction chamber (104) includes an output port (141) disposed at or proximate to the top (139) of the second reaction chamber, wherein at least a majority of the hydrogen gas is configured to exit the second reaction chamber through the output port.

5. The production system (100) of claim 1, wherein each of the first reaction chamber (102) and the second reaction chamber (104) is one of a falling packed bed reaction chamber, fluidized bed reaction chamber, a fixed bed reaction chamber, or a trickle-bed reaction chamber.

6. The production system (100) of claim 1, further comprising a power generation system (150) fluidly connected to an output port (141) of the second reaction chamber (104), the power generation system configured to receive the hydrogen gas exiting the second reaction chamber for using the hydrogen gas to generate electrical power.

7. The production system (100) of claim 6, wherein the power generation system (150) includes one or more of a fuel cell, a combustion engine, a generator, or a turbine.

8. The production system (100) of claim 6, further comprising a heat exchanger (160) and a duct (108H) connecting the power generation system (150) to the heat exchanger, the heat exchanger disposed in a path of at least one of the first or second hydrocarbon streams (124, 126) upstream of the first and second reaction chambers (102, 104), the duct configured to direct heat from the power generation system to the heat exchanger for preheating at least one of the first or second hydrocarbon streams.

## Patentansprüche

1. Produktionssystem (100), umfassend:
eine erste Reaktionskammer (102), die konfiguriert ist, um einen ersten Kohlenwasserstoffstrom (124) darin durch einen Eingangsanschluss (128) aufzunehmen und Kohlenstoffkeime (202) und Wasserstoffgas darin mittels Kohlenwasserstoffpyrolyse des ersten Kohlenwasserstoffstroms auszubilden;
eine zweite Reaktionskammer (104), die einen ersten Eingangsanschluss (131) und einen zweiten Eingangsanschluss (130) einschließt, wobei die zweite Reaktionskammer konfiguriert ist, um die Kohlenstoffkeime durch den ersten Eingangsanschluss und einen zweiten Kohlenwasserstoffstrom (126) durch den zweiten Eingangsanschluss aufzunehmen, wobei die zweite Reaktionskammer konfiguriert ist, um Kohlenstoffproduktelemente (302) und zusätzliches Wasserstoffgas in der zweiten Reaktionskammer über Kohlenwasserstoffpyrolyse des zweiten Kohlenwasserstoffstroms auszubilden, wobei die Kohlenstoffproduktelemente die Kohlenstoffkeime mit zusätzlicher Kohlenstoffstruktur (304) darstellen, die auf den Kohlenstoffkeimen wächst; und
einen Feststoffpartikel-Mover (133), der konfiguriert ist, um die Kohlenstoffproduktelemente (302) von einem Ausgangsanschluss (142) der zweiten Reaktionskammer (104) zu einem ersten Eingangsanschluss (131) der zweiten Reaktionskammer (104) zu fördern, um die Kohlenstoffproduktelemente in die zweite Reaktionskammer (104) wieder einzuführen.

2. Produktionssystem (100) nach Anspruch 1, wobei die erste und die zweite Reaktionskammer (102, 104) heterogene katalytische Reaktionskammern sind.

3. Produktionssystem (100) nach Anspruch 1, wobei der erste und der zweite Eingangsanschluss (131, 130) entlang einer Höhe der zweiten Reaktionskammer (104) derart beabstandet sind, dass eine Oberseite (139) der zweiten Reaktionskammer näher zu dem ersten Eingangsanschluss als zu dem zweiten Eingangsanschluss angeordnet ist und eine Unterseite (137) der zweiten Reaktionskammer näher zu dem zweiten Eingangsanschluss als zu dem ersten Eingangsanschluss angeordnet ist.

4. Produktionssystem (100) nach Anspruch 3, wobei die zweite Reaktionskammer (104) einen Ausgangsanschluss (141) umfasst, der an oder nahe der Oberseite (139) der zweiten Reaktionskammer angeordnet ist, wobei mindestens ein Großteil des Wasserstoffgases konfiguriert ist, um die zweite Reaktionskammer durch den Ausgangsanschluss zu verlassen.

5. Produktionssystem (100) nach Anspruch 1, wobei jede der ersten Reaktionskammer (102) und der zweiten Reaktionskammer (104) eine von einer Fallschüttbettreaktionskammer, einer Wirbelbettreaktionskammer, einer Festbettreaktionskammer oder einer Rieselbettreaktionskammer ist.

6. Produktionssystem (100) nach Anspruch 1, ferner umfassend ein Leistungserzeugungssystem (150), das mit einem Ausgangsanschluss (141) der zweiten Reaktionskammer (104) fluidisch verbunden ist, wobei das Leistungserzeugungssystem konfiguriert ist, um das Wasserstoffgas zu empfangen, das aus der zweiten Reaktionskammer austritt, zum Verwenden des Wasserstoffgases, um elektrische Leistung zu erzeugen.

7. Produktionssystem (100) nach Anspruch 6, wobei das Leistungserzeugungssystem (150) eine oder mehrere von einer Brennstoffzelle, einem Verbrennungsmotor, einem Generator oder einer Turbine umfasst.

8. Produktionssystem (100) nach Anspruch 6, ferner umfassend einen Wärmetauscher (160) und einen Kanal (108H), der das Leistungserzeugungssystem (150) mit dem Wärmetauscher verbindet, wobei der Wärmetauscher in einem Pfad von mindestens einem des ersten oder des zweiten Kohlenwasserstoffstroms (124, 126) stromaufwärts der ersten und der zweiten Reaktionskammer (102, 104) angeordnet ist, wobei der Kanal konfiguriert ist, um Wärme von dem Leistungserzeugungssystem zu dem Wärmetauscher zu leiten, um mindestens einen des ersten oder des zweiten Kohlenwasserstoffstroms vorzuwärmen.

## Revendications

1. Système de synchronisation (100) comprenant :
une première chambre de réaction (102) conçue pour recevoir un premier flux d'hydrocarbures (124) à l'intérieur de celle-ci par un orifice d'entrée (128) et pour former des graines de carbone (202) et de l'hydrogène gazeux dans celle-ci par l'intermédiaire de la pyrolyse d'hydrocarbures du premier flux d'hydrocarbures ;
une seconde chambre de réaction (104) comportant un premier orifice d'entrée (131) et un second orifice d'entrée (130), la seconde chambre de réaction étant conçue pour recevoir les graines de carbone par l'intermédiaire du premier orifice d'entrée et un second flux d'hydrocarbures (126) par l'intermédiaire du second orifice d'entrée, la seconde chambre de réaction étant conçue pour former des éléments de produit carbonés (302) et de l'hydrogène gazeux supplémentaire dans la seconde chambre de réaction par l'intermédiaire d'hydrocarbures une pyrolyse du second flux d'hydrocarbures, dans lequel les éléments produits carbonés représentent les graines de carbone avec une structure de carbone supplémentaire (304) cultivée sur les graines de carbone ; et
un dispositif de déplacement de particules solides (133) conçu pour transporter les éléments de produit carboné (302) à partir d'un port de sortie (142) de la seconde chambre de réaction (104) vers le premier port d'entrée (131) de la seconde chambre de réaction (104) afin de réintroduire les éléments de produit carboné dans la seconde chambre de réaction (104).

2. Système de production (100) selon la revendication 1, dans lequel les première et seconde chambres de réaction (102, 104) sont des chambres de réaction catalytique hétérogènes.

3. Système de production (100) selon la revendication 1, dans lequel les premier et second orifices d'entrée (131, 130) sont espacés le long d'une hauteur de la seconde chambre de réaction (104) de telle sorte qu'un sommet (139) de la seconde chambre de réaction est disposé plus près du premier orifice d'entrée que le second orifice d'entrée et un fond (137) de la seconde chambre de réaction est disposé plus près du second port d'entrée que le premier port d'entrée.

4. Système de production (100) selon la revendication 3, dans lequel la seconde chambre de réaction (104) comporte un orifice de sortie (141) disposé au niveau ou à proximité du sommet (139) de la seconde chambre de réaction, dans lequel au moins une majorité de l'hydrogène gazeux est conçue pour sortir de la seconde chambre de réaction par l'orifice de sortie.

5. Système de production (100) selon la revendication 1, dans lequel chacune de la première chambre de réaction (102) et de la seconde chambre de réaction (104) est l'une parmi une chambre de réaction à lit garni tombant, une chambre de réaction à lit fluidisé, une chambre de réaction à lit fixe ou une chambre de réaction à lit ruisselant.

6. Système de production (100) selon la revendication 1, comprenant en outre un système de production d'énergie (150) relié fluidiquement à un orifice de sortie (141) de la seconde chambre de réaction (104), le système de génération d'énergie étant configuré pour recevoir l'hydrogène gazeux sortant de la seconde chambre de réaction afin d'utiliser l'hydrogène gazeux pour générer de l'énergie électrique.

7. Système de production (100) selon la revendication 6, dans lequel le système de production d'énergie (150) comporte un ou plusieurs parmi une pile à combustible, un moteur à combustion, un générateur ou une turbine.

8. Système de production (100) selon la revendication 6, comprenant en outre un échangeur de chaleur (160) et un conduit (108H) reliant le système de production d'énergie (150) à l'échangeur de chaleur, l'échangeur de chaleur étant disposé dans un trajet d'au moins l'un parmi les premier ou second courants d'hydrocarbures (124, 126) en amont de la première et la seconde chambre de réaction (102, 104), le conduit étant conçu pour diriger la chaleur du système de production d'énergie vers l'échangeur de chaleur pour préchauffer au moins l'un d'entre eux des premier ou second courants d'hydrocarbures.
